# FASCICULE DE BREVET EUROPEEN

(11) **EP 0 957 284 B1**
(45) Date de publication et mention de la délivrance du brevet: **02.04.2003**
(21) Numéro de dépôt: 99401005.6
(22) Date de dépôt: 23.04.1999
(51) Int. Cl.: F16F 13/10

(54) **Procédé de réalisation d'une platine intermédiaire d'un support hydroélastique et platine intermédiaire obtenue par ce procédé**
Methode zum Herstellen einer Zwischenplatte von einem hydroelastischen Lager und Zwischenplatte dadurch hergestellt
Production method for intermediate plate of a hydraulically-damped elastic support and intermediate plate thereby obtained

(30) Priorité: 13.05.1998 FR 9806034
(43) Date de publication de la demande: 17.11.1999
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Lanceplaine, Jean-Claude

(56) Documents cités:
- EP-A- 0 231 898
- DE-A- 3 638 647
- US-A- 4 651 980
- US-A- 4 921 201
- PATENT ABSTRACTS OF JAPAN vol. 009, no. 139 (M-387), 14 juin 1985 (1985-06-14) & JP 60 018632 A (BRIDGESTONE KK), 30 janvier 1985 (1985-01-30)

## Description

La présente invention a pour objet un procédé de fabrication d'une platine intermédiaire d'un support hydroélastique destiné à être interposé entre deux éléments à suspendre l'un par rapport à l'autre, notamment pour la suspension d'un groupe motopropulseur dans une caisse d'un véhicule automobile.

L'invention a également pour objet une platine intermédiaire d'un support hydroélastique obtenue par ce procédé.

Les supports hydroélastiques comportent généralement un corps formé par une masse en matériau élastomère reliant une armature supérieure et une armature inférieure fixées respectivement sur les deux éléments et une chambre de travail délimitée par ladite masse en matériau élastomère et par une platine intermédiaire au-dessous de laquelle est fixée une membrane inférieure souple délimitant avec ladite platine une chambre d'expansion.

La chambre d'expansion est reliée à la chambre de travail par une chambre intermédiaire et des passages de communication ménagés dans la platine et ces chambres sont remplies de liquide.

Le plus souvent la platine intermédiaire est formée par une armature supérieure et par une armature inférieure entre lesquelles est placée une membrane en matériau élastomère formant un clapet de découplage hydraulique. La face supérieure du clapet est en contact avec le liquide contenu dans la chambre de travail par un orifice axial ménagé dans l'armature supérieure et la face inférieure de ce clapet est en contact avec le liquide contenu dans la chambre d'expansion par un orifice axial ménagé dans l'armature inférieure.

La partie centrale du clapet assure deux fonctions qui sont la séparation de la chambre de travail de la chambre d'expansion et le filtrage du bourdonnement par déplacement de cette partie centrale selon un débattement déterminé par le jeu ménagé entre le clapet et les deux armatures.

Ainsi, l'armature supérieure de la platine intermédiaire limite les débattements du clapet vers la chambre de travail tandis que l'armature inférieure limite les débattements de ce clapet vers la chambre d'expansion.

Pour cela, l'armature supérieure comporte sur son bord interne au moins une languette dirigée vers le centre de ladite armature et l'armature inférieure comporte également sur son bord interne au moins une languette dirigée vers le centre de l'armature inférieure.

Jusqu'à présent, les éléments composant la platine intermédiaire, c'est-à-dire les deux armatures et la membrane, sont réalisés séparément et placés les uns sur les autres de façon à bloquer cette membrane entre lesdites armatures.

Mais, cette conception présente des inconvénients.

En effet, la membrane n'est pas liée aux deux armatures ce qui peut entraîner des défauts de positionnement et par conséquent des défauts d'étanchéité entre les deux chambres. De plus, le temps de montage des éléments est relativement long ce qui augmente le coût du support hydroélastique.

L'invention a pour but d'éviter ces inconvénients en proposant un procédé de réalisation d'une platine intermédiaire d'un support hydroélastique qui permet de simplifier l'assemblage des différents composants de la platine et de ce fait de diminuer le temps et le coût de fabrication, tout en supprimant les risques de défaut de positionnement d'un composant par rapport aux autres.

L'invention a donc pour objet un procédé de réalisation d'une platine intermédiaire d'un support hydroélastique destiné à être interposé entre deux éléments à suspendre l'un par rapport à l'autre, notamment pour la suspension d'un groupe motopropulseur dans une caisse d'un véhicule automobile, ladite platine séparant une chambre de travail et une chambre d'expansion ménagées dans le support et comprenant une armature supérieure formée par un anneau muni sur son bord interne d'au moins une languette dirigée vers le centre dudit anneau, une armature inférieure formée par une rondelle munie sur son bord interne d'au moins une languette dirigée vers le centre de ladite rondelle et une gorge annulaire ménagée entre les bords interne et externe de ladite rondelle et une membrane en matériau élastomère placée entre les armatures et comportant un bourrelet périphérique et une rondelle interne de renforcement,
caractérisé en ce que :
- on enduit la face inférieure de l'anneau de l'armature supérieure d'un produit adhérant avec l'élastomère,
- on enduit la face supérieure de la zone située entre le bord interne et la gorge de la rondelle de l'armature inférieure d'un produit adhérant avec l'élastomère,
- on pose dans un moule l'armature supérieure en positionnant la face enduite vers le haut,
- on pose au-dessus de l'armature supérieure la rondelle de renforcement sur des pions de centrage ménagés dans le moule,
- on pose au-dessus de l'armature supérieure l'armature inférieure en positionnant la zone enduite vers le bas et en décalant ladite languette de l'armature inférieure par rapport à ladite languette de l'armature supérieure ,
- on injecte entre les armatures l'élastomère pour qu'il enrobe la rondelle de renforcement et adhère sur les zones enduites des armatures en solidarisant après vulcanisation de cet élastomère lesdites armatures l'une à l'autre et en formant dans la gorge de l'armature inférieure une pâte de séparation de cette gorge,
- on retire du moule la platine munie de la membrane bloquée entre les languettes des armatures,
- et on déforme successivement les languettes de l'armature supérieure et de l'armature inférieure vers l'extérieur de la platine pour créer un jeu entre la partie centrale de la membrane et lesdites languettes.

Selon d'autres caractéristiques de l'invention :
- on déforme ladite languette de l'armature supérieure en appliquant, d'une part, au-dessus de la languette une contre-forme de calibrage, et, d'autre part, au-dessous de la membrane et en vis-à-vis de cette languette un outil de déformation et en exerçant une poussée sur l'outil de déformation,
- on déforme ladite languette de l'armature inférieure en appliquant, d'une part, au-dessous de la languette une contre-forme de calibrage et, d'autre part, au-dessus de la membrane et en vis-à-vis de cette languette un outil de déformation et en exerçant une poussée sur ledit outil de déformation,
- les armatures supérieure et inférieure sont en acier ou en aluminium ou en alliage d'aluminium.

L'invention a également pour objet une platine intermédiaire d'un support hydroélastique, caractérisée en ce qu'elle est réalisée par le procédé mentionné ci-dessus.

Les caractéristiques et avantages de l'invention apparaîtront au cours de la description qui va suivre, donnée à titre d'exemple et faite en référence aux dessins annexés, sur lesquels :
- la Fig. 1 est une vue en coupe transversale d'un support hydroélastique muni d'une platine intermédiaire réalisée par le procédé conforme à l'invention,
- la Fig. 2 est une vue en perspective de la platine intermédiaire,
- la Fig. 3 est une vue en perspective éclatée de la platine intermédiaire,
- les Fig. 4A à 4D sont des vues schématiques en coupe transversale montrant les différentes étapes de déformation des languettes des armatures de la platine intermédiaire.
   Lé support hydroélastique représenté à la Fig. 1 est adapté pour être interposé entre deux ensembles à suspendre l'un par rapport à l'autre et plus particulièrement pour être interposé entre un groupe motopropulseur et le reste de la structure ou châssis de ce véhicule.

Le support hydroélastique comprend un corps 10 formé par une masse en matériau élastomère 11 qui relie, d'une part, une première armature 12 en acier, et, d'autre part, une seconde armature 13 également en acier. Les armatures 12 et 13 peuvent également être réalisées en aluminium ou en alliage d'aluminium.

La première armature 12 est munie d'un organe de liaison 14 avec l'élément à supporter, comme par exemple le groupe motopropulseur du véhicule automobile.

Le corps 10 est réalisé par surmoulage et adhérisation de l'élastomère sur les armatures 12 et 13.

La seconde armature 13 comporte un rebord 13a de sertissage de la partie inférieure du support hydroélastique qui se compose de haut en bas d'un limiteur d'attaque 15, d'une platine intermédiaire 20, d'une membrane inférieure souple 16 et d'une coupelle de liaison 17 avec la structure du véhicule automobile.

A cet effet, la coupelle 17 est munie d'un organe de liaison 17a avec ladite structure.

La masse 11 en matériau élastomère délimite avec la platine inférieure 20 une chambre de travail 18 et cette platine intermédiaire 20 délimite avec la membrane souple 16 une chambre d'expansion 19.

Les chambres de travail 18 et d'expansion 19 sont remplies de liquide comme par exemple de l'antigel et sont reliées entre elles par des passages de communication ménagés dans la platine intermédiaire 20, comme on le verra ultérieurement.

Le limiteur d'attaque 15 est formé par une coupelle qui comporte au moins un orifice 15a permettant le passage du liquide.

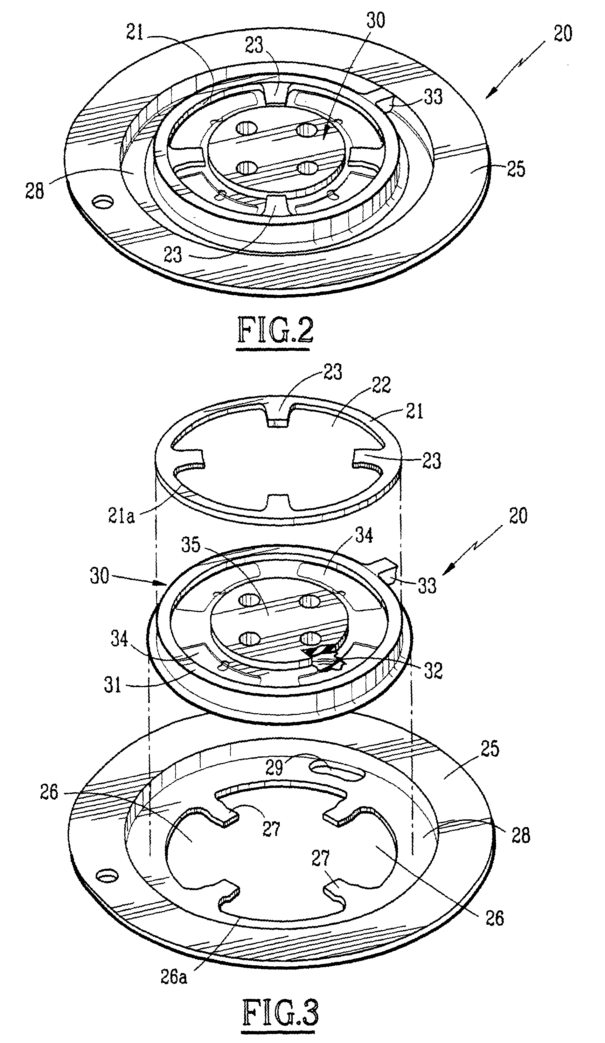

En se reportant maintenant aux Fig. 2 et 3, on va décrire la platine intermédiaire 20.

Cette platine intermédiaire 20 comprend une armature supérieure 21 formée par un anneau 21 délimitant un orifice central 22 muni sur son bord interne d'au moins une languette 23 dirigée vers le centre dudit anneau.

Dans l'exemple de réalisation représenté sur les figures, l'armature supérieure 21 comporte sur son bord interne 21a quatre languettes 23 décalées de 90° les unes par rapport aux autres.

L'armature supérieure 21 est de préférence en acier.

La platine intermédiaire 20 comporte aussi une armature inférieure 25 en acier ou en aluminium ou en alliage d'aluminium ayant la forme générale d'une rondelle munie d'un orifice axial 26 dont le bord 26a interne comporte au moins une languette 27 dirigée vers le centre de ladite rondelle.

Dans l'exemple de réalisation représenté sur les figures, l'armature inférieure 25 comporte quatre languettes 27 décalées de 90° les unes par rapport aux autres.

De plus, l'armature inférieure 25 comporte une gorge annulaire 28 ménagée entre les bords interne et externe de la rondelle formant l'armature inférieure 25 et dont le creux est orienté vers la face supérieure de ladite armature 25.

Un orifice 29 est ménagé dans le fond de la gorge annulaire 28 de l'armature inférieure 25.

Enfin, la platine intermédiaire 20 comprend également une membrane 30 en matériau élastomère moulée entre les armatures 21 et 25.

La membrane 30 comporte un bourrelet périphérique 31 et une rondelle interne de renforcement 32 en métal ou en matière thermoplastique et sur laquelle est surmoulé le matériau élastomère formant la membrane 30.

La membrane 30 comporte sur la face externe du bourrelet 31 une patte 33 dont le rôle est d'assurer l'étanchéité entre une zone d'entrée et une zone de sortie du liquide dans la gorge annulaire 28 de l'armature inférieure 25.

La membrane 30 est munie de zones amincies 34 donnant à la partie centrale de ladite membrane 30 la souplesse requise.

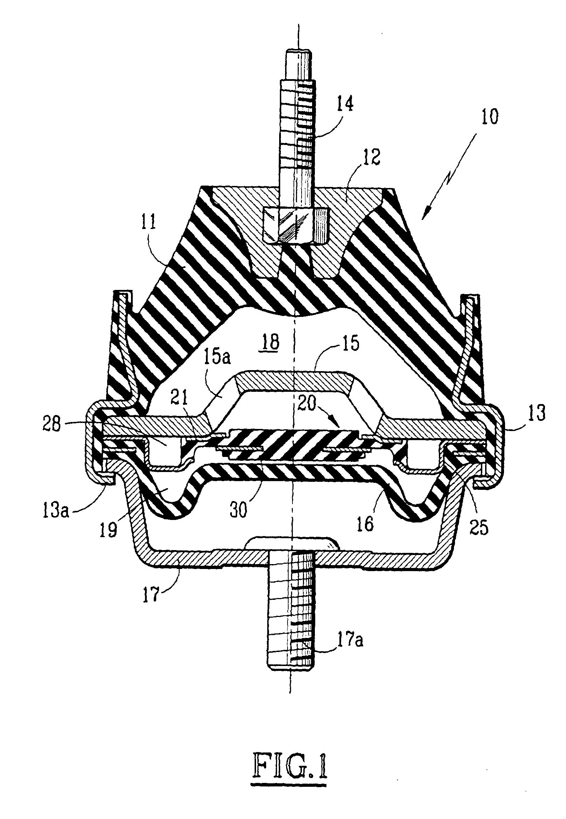

Le bourrelet périphérique 31 assure l'étanchéité au niveau du limiteur d'attaque 15, comme représenté à la Fig. 1.

La membrane 30 relie l'armature supérieure 21 à l'armature inférieure 25 et les débattements de la partie centrale 35 de la membrane 30 formant un clapet sont limités par les languettes 23 et 27 qui sont légèrement repliées vers l'extérieur de la platine intermédiaire 20 de façon à permettre ces débattements.

La platine intermédiaire 20 est réalisée de la façon suivante.

Tout d'abord, on enduit la face inférieure de l'anneau de l'armature supérieure 21 d'un produit adhérant avec l'élastomère sans déposer ce produit sur les languettes 23 et on enduit la face supérieure de la zone située entre le bord interne 26a et la gorge 28 de la rondelle de l'armature inférieure 25 également d'un produit adhérant avec l'élastomère, sans déposer ce produit sur les languettes 27.

Après cette première opération, on pose dans un moule, non représenté, l'armature supérieure 21 en positionnant la face enduite vers le haut, puis on pose au-dessus de l'armature supérieure 21 la rondelle de renforcement 32 sur des pions de centrage ménagés dans le moule et on pose dans ce moule, au-dessus de l'armature inférieure 21 et de la rondelle de renforcement 32, l'armature inférieure 25 en positionnant la zone enduite vers le bas et en décalant les languettes de l'armature inférieure 25 par rapport aux languettes de l'armature supérieure 21.

Les armatures 21 et 25 sont indexées de façon à ce que les languettes 23 et 27 se trouvent décalées de 45° dans le cas où elles sont au nombre de quatre ou de 60° si elles sont au nombre de trois.

Après la fermeture du moule, l'opération suivante consiste à injecter entre les armatures 21 et 25 l'élastomère destiné à former la membrane 30 pour qu'il enrobe la rondelle de renforcement 32 et adhère sur les zones enduites les armatures 21 et 25 en solidarisant après vulcanisation de cet élastomère lesdites armatures 21 et 25 l'une à l'autre et en formant dans la gorge annulaire 28 de l'armature inférieure 25 la patte de séparation 33.

La platine intermédiaire 20 ainsi formée est sortie du moule et à ce stade du procédé, les languettes 23 et 27 des armatures 21 et 25 sont planes et la partie centrale 35 de la membrane 30 est bloquée entre les languettes 23 et 27 des armatures 21 et 25.

La dernière opération consiste à créer le jeu entre les languettes 23 et 27 et la partie centrale 35 formant le clapet pour obtenir un bon fonctionnement dans la zone de bourdonnement.

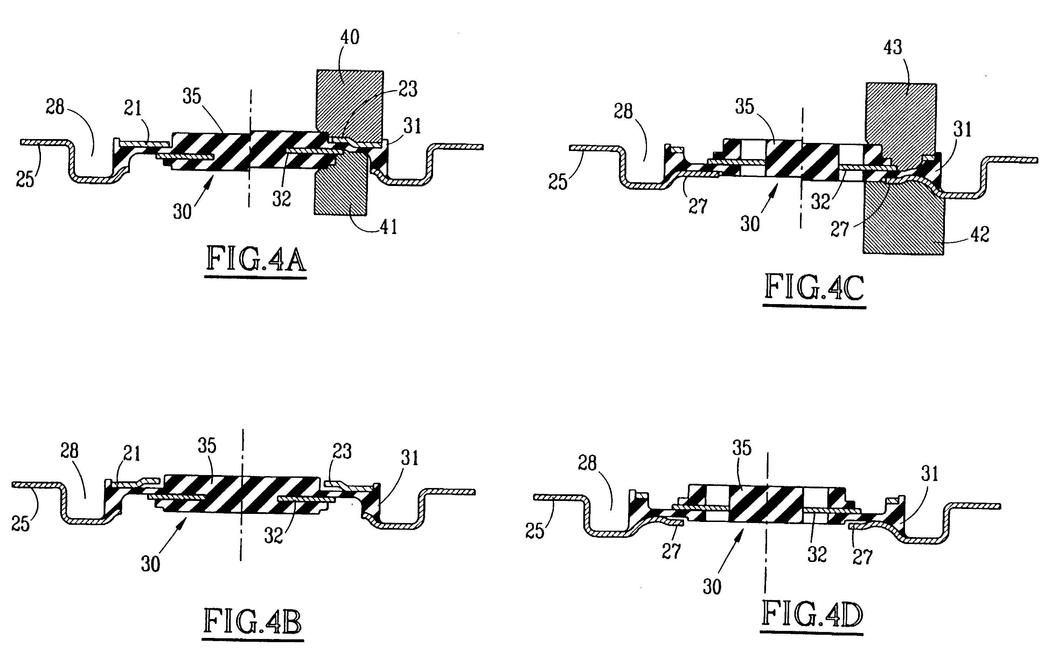

En se reportant maintenant aux Fig. 4A à 4D, on va décrire cette dernière opération.

Sur la partie gauche de la Fig. 4A, on a représenté une languette 23 de l'armature supérieure 21 avant déformation et sur la partie droite de cette Fig. 4A, une languette 23 en cours de déformation.

A cet effet, on déforme successivement chaque languette 23 de l'armature supérieure 21 en appliquant, d'une part, au-dessus de la languette 23 une contre-forme de calibrage 40 et, d'autre part, au-dessous de la membrane 30 et en vis-à-vis de la languette 23 à déformer un outil de déformation 41. Ensuite, on exerce une poussée sur l'outil de déformation 41 qui grâce à l'incompressibilité de l'élastomère formant la membrane 30 permet de déformer la languette 23 selon l'empreinte de la contre-forme de calibrage 40.

Cette opération est renouvelée pour chaque languette 23 de l'armature supérieure 21.

Ainsi et comme représenté à la Fig. 4B, on crée entre la partie centrale 35 de la membrane 30 un jeu permettant le déplacement de ladite partie centrale 35 vers la chambre de travail 18.

Sur la partie gauche de la Fig. 4C, on a représenté une languette 27 de l'armature inférieure 25 avant déformation et sur la partie droite de cette Fig. 4C, une languette 27 en cours de déformation.

On déforme la languette 27 de l'armature inférieure 25 en appliquant, d'une part, au-dessous de la languette 27 une contre-forme de calibrage 42 et, d'autre part, au-dessus de la membrane 30 et en vis-à-vis de cette languette 27 un outil de déformation 43.

Ensuite, on exerce une poussée sur l'outil de déformation 43 ce qui permet grâce à l'incompressibilité de l'élastomère formant la membrane 30 de déformer la languette 27 selon la forme désirée.

Cette opération est renouvelée pour l'ensemble des languettes 27 de l'armature inférieure 25.

Ainsi et comme représenté à la Fig. 4D, on obtient entre la partie centrale 35 de la membrane 30 et les languettes 27 de l'armature inférieure 25 le jeu permettant les débattements vers la chambre d'expansion de cette partie centrale 35 de la membrane 30.

La platine intermédiaire 20 ainsi réalisée est ensuite montée sur le corps 10 du support hydroélastique.

L'armature supérieure 21 de cette platine intermédiaire 20 limite les débattements de la membrane 30 vers la chambre de travail 18 et l'armature inférieure 25 permet d'amortir le mode de hachis grâce à la gorge annulaire 28 intégrée dans ladite armature et également de limiter les débattements de la membrane 30 vers la chambre d'expansion 19. La membrane 30 assure le filtrage du bourdonnement et permet de séparer la chambre de travail 18 de la chambre d'expansion 19.

De par sa conception, la platine intermédiaire conforme à l'invention est très compacte et sa configuration permet de diminuer le coût de fabrication ainsi que celui du montage grâce à sa simplification. De plus, la membrane est liée aux deux armatures ce qui supprime tous risques de défaut de positionnement et la liaison entre cette membrane et les deux armatures permet d'obtenir une étanchéité parfaite entre les deux chambres.

Enfin, la déformation des languettes des armatures de la platine intermédiaire permet de régler le jeu de la membrane qui dépend de l'amplitude excitatrice au niveau du corps du support hydroélastique.

Toutes les déformations sont réalisées simultanément en une seule opération et en temps masqué après démoulage pendant l'opération de vulcanisation - adhérisation de la membrane 30.

## Revendications

1. Procédé de fabrication d'une platine intermédiaire (20) d'un support hydroélastique destiné à être interposé entre deux éléments à suspendre l'un par rapport à l'autre, notamment pour la suspension d'un groupe motopropulseur d'une caisse d'un véhicule automobile, ladite platine (20) séparant une chambre de travail (18) d'une chambre d'expansion (19) ménagée dans le support et comprenant une armature supérieure (21) formée par un anneau muni sur son bord interne (21a) d'au moins une languette (23) dirigée vers le centre dudit anneau, une armature inférieure (25) formée par une rondelle munie sur son bord interne (26a) d'au moins une languette (27) dirigée vers le centre de la rondelle et une gorge annulaire (28) ménagée entre les bords interne et externe de la rondelle et une membrane (30) en matériau élastomère placée entre les armatures (21, 25) et comportant un bourrelet périphérique (31) et une rondelle interne de renforcement (32), **caractérisé en ce que** :
- on enduit la face inférieure de l'anneau de l'armature supérieure (21) d'un produit adhérant avec l'élastomère,
- on enduit la face supérieure de la zone située entre le bord interne et la gorge (28) de la rondelle de l'armature inférieure (25) d'un produit adhérant avec l'élastomère,
- on pose dans un moule l'armature supérieure (21) en positionnant la face enduite vers le haut,
- on pose au-dessus de l'armature supérieure (21) la rondelle de renforcement (32) sur des pions de centrage ménagés dans le moule,
- on pose au-dessus de l'armature supérieure (21) l'armature inférieure (25) en positionnant la zone enduite vers le bas et en décalant ladite languette (27) de l'armature inférieure (25) par rapport à ladite languette (23) de l'armature supérieure (21),
- on injecte entre les armatures (21, 25) l'élastomère pour qu'il enrobe la rondelle de renforcement (32) et adhère sur les zones enduites les armatures (21, 25) en solidarisant après vulcanisation de cet élastomère lesdites armatures l'une à l'autre et en formant dans la gorge (28) de l'armature inférieure (25) une patte (33) de séparation de cette gorge (28),
- on retire du moule la platine (20) munie de la membrane (30) bloquée entre les languettes (23, 27) des armatures (21, 25),
- et on déforme successivement les languettes de l'armature supérieure et de l'armature inférieure (23, 27) vers l'extérieur de la platine (20) pour créer un jeu entre la partie centrale (35) de la membrane (30) et lesdites languettes (23, 27).

2. Procédé selon la revendication 1, **caractérisé en ce que** l'on déforme ladite languette (23) de l'armature supérieure (21) en appliquant, d'une part, au-dessus de la languette (23) une contre-forme de calibrage (40) et, d'autre part, au-dessous de la membrane (30) et en vis-à-vis de cette languette (23) un outil de déformation (41) et en exerçant une poussée sur ledit outil de déformation (41).

3. Procédé selon la revendication 1, **caractérisé en ce que** l'on déforme ladite languette (27) de l'armature inférieure (25) en appliquant, d'une part, au-dessous de la languette (27) une contre-forme de calibrage (42) et, d'autre part, au-dessus de la membrane (30) et en vis-à-vis de cette languette (27) un outil de déformation (43) et en exerçant une poussée sur l'outil de déformation (43).

4. Procédé selon l'une quelconque des revendications 1 à 3, **caractérisé en ce que** l'armature supérieure (21) est en acier ou en aluminium ou en alliage d'aluminium.

5. Procédé selon l'une quelconque des revendications 1 à 3, **caractérisé en ce que** l'armature inférieure (25) est en acier ou en aluminium ou en alliage d'aluminium.

6. Platine intermédiaire d'un support hydroélastique destiné à être interposé entre deux éléments à suspendre l'un par rapport à l'autre, notamment pour la suspension d'un groupe motopropulseur dans une caisse d'un véhicule automobile, **caractérisée en ce qu'**elle est réalisée par le procédé selon l'une quelconque des revendications précédentes.

## Claims

1. Method of manufacturing an intermediate plate (20) of a hydroelastic mount intended to be inserted between two elements to be suspended one with respect to the other, particularly for suspending a motive power unit from the body of a motor vehicle, the said plate (20) separating a working chamber (18) from an expansion chamber (19) formed in the mount and comprising an upper armature (21) formed of an annulus equipped on its internal edge (21a) with at least one tab (23) directed towards the centre of the said annulus, a lower armature (25) formed by a washer equipped on its internal edge (26a) with at least one tab (27) directed towards the centre of the washer and an annular groove (28) formed between the internal and external edges of the washer and a membrane (30) made of elastomeric material placed between the armatures (21, 25) and comprising a peripheral bulge (31) and a reinforcing internal washer (32), **characterized in that** :
- the underside of the annulus of the upper armature (21) is coated with a product that sticks to the elastomer,
- the top face of the region situated between the internal edge and the groove (28) of the washer of the lower armature (25) is coated with a product that sticks to the elastomer,
- the upper armature (21) is placed in a mould, coated face uppermost,
- the reinforcing washer (32) is placed over the upper armature (21) on centring pegs made in the mould,
- the lower armature (25) is placed on top of the upper armature (21), with the coated region facing downwards, and the said tab (27) of the lower armature (25) offset from the said tab (23) of the upper armature (21),
- the elastomer is injected between the armatures (21, 25) so that it coats the reinforcing washer (32) and sticks to the coated regions of the armatures (21, 25) securing the said armatures together once this elastomer has cured, and forming, in the groove (28) of the lower armature (25), a lug (33) for separation of this groove (28),
- the plate (20) equipped with the membrane (30) immobilized between the tabs (23, 27) of the armatures (21, 25) is removed from the mould,
- and the tabs of the upper armature and of the lower armature (23, 27) are deformed successively towards the outside of the plate (20) to create clearance between the central part (35) of the membrane (30) and the said tabs (23, 27).

2. Method according to Claim 1, **characterized in that** the said tab (23) of the upper armature (21) is deformed by applying, on the one hand, over the tab (23), a bending former (40) and, on the other hand, under the membrane (30) and facing this tab (23), a deforming tool (41) and by exerting thrust on the said deforming tool (41).

3. Method according to Claim 1, **characterized in that** the said tab (27) of the lower armature (25) is deformed by applying, on the one hand, below the tab (27), a bending former (42) and, on the other hand, over the membrane (30) and facing this tab (27), a deforming tool (43) and by exerting thrust on the said deforming tool (43).

4. Method according to any one of Claims 1 to 3, **characterized in that** the upper armature (21) is made of steel or aluminium or aluminium alloy.

5. Method according to any one of Claims 1 to 3, **characterized in that** the lower armature (25) is made of steel or aluminium or aluminium alloy.

6. Intermediate plate of a hydroelastic mount intended to be inserted between two elements to be suspended one with respect to the other, particularly for suspending a motive power unit in the body of a motor vehicle, **characterized in that** it is produced using a method according to any one of the preceding claims.

## Patentansprüche

1. Methode für die Herstellung einer Zwischenplatte (20) eines hydroelastischen Lagers, welche zwischen zwei Elementen angeordnet wird, die im Verhältnis zueinander aufgehängt werden sollen, und zwar insbesondere für die Aufhängung einer Antriebsgruppe in der Karosserie eines Kraftfahrzeuges bestimmt ist, wobei mit Hilfe dieser Zwischenplatte (20) eine Arbeitskammer (18) und eine Expansionskammer (19) voneinander getrennt werden, welche in diesem Lager angeordnet sind und einen oberen Beschlag (21) enthält, der aus einem Ring besteht, welcher an seinem inneren Rand (21a) mindestens eine Langette (23) enthält, die gegen das Zentrum dieses Ringes gerichtet ist, und einen unteren Beschlag (25) aufweist, der aus einer Unterlegscheibe besteht, welche an ihrem inneren Rand (26a) mit mindestens einer Langette (27) ausgestattet ist, die gegen das Zentrum dieser Unterlegscheibe gerichtet ist, und eine ringförmige Nut (28) enthält, die zwischen dem inneren und dem äußeren Rand der Unterlegscheibe vorgesehen ist, und eine Membran (30) aus einem elastomeren Material enthält, welche zwischen den Beschlägen (21, 25) angeordnet ist und einen peripheren Wulst (31) und eine innere Verstärkungsscheibe (32) aufweist,
**dadurch gekennzeichnet, dass**
- die Unterseite des Ringes des oberen Beschlages (21) mit einem Produkt behandelt wird, das an dem Elastomer haften kann;
- die Oberseite des Bereiches, der zwischen dem inneren Rand und der Nut (28) der Unterlegscheibe des unteren Beschlages (25) liegt, mit einem Produkt behandelt wird, das an dem Elastomer haften kann;
- der obere Beschlag (21) in eine Form so eingelegt wird, dass die mit dem Produkt behandelte Seite nach oben zeigt;
- über dem oberen Beschlag (21) die Verstärkungsscheibe (32) auf Zentrierstifte aufgesetzt wird, welche in der Form angeordnet sind;
- über dem oberen Beschlag (21) der untere Beschlag (25) so angeordnet wird, dass der mit dem Produkt behandelte Bereich nach unten gerichtet ist und die Langette (27) des unteren Beschlages gegenüber der Langette (23) des oberen Beschlages (21) versetzt angeordnet wird;
- zwischen den Beschlägen (21, 25) das Elastomer so eingespritzt wird, dass es die Verstärkungsscheibe (32) umhüllt und an den beschichteten Bereichen der Beschläge (21, 25) haften kann, und nach der Vulkanisierung des Elastomers diese Beschläge aneinander befestigt werden und in der Nut des unteren Beschlages (25) einen Überwurf (33) für die Trennung dieser Nut (28) ausbilden;
- die mit der Membran (30) ausgestattete Zwischenplatte (20), die zwischen den Langetten (23, 27) und den Beschlagen (21, 25) blockiert ist, aus der Form herausgenommen wird; und
- die Langetten (23, 27) des oberen Beschlages und des unteren Beschlages (21, 25) sukzessive in Richtung der Außenseite der Zwischenplatte (20) verformt werden, um ein Spiel zwischen dem zentralen Teil der Membran (30) und den Langetten (23, 27) herzustellen.

2. Methode nach Anspruch 1,
**dadurch gekennzeichnet, dass**
die Langette (23) des oberen Beschlages (21) dadurch verformt wird, dass einerseits oberhalb der Langette (21) eine Gegenform für die Kalibrierung (40) aufgesetzt wird, und andererseits unterhalb der Membran (30) und gegenüber dieser Langette (23) ein Werkzeug für die Verformung (41) angesetzt und ein Druck auf dieses Werkzeug für die Verformung (41) ausgeübt wird.

3. Methode nach einem der vorausgegangenen Ansprüche,
**dadurch gekennzeichnet,dass**
der obere Beschlag (21) aus Stahl oder Aluminium oder einer Aluminiumlegierung hergestellt wird.

4. Methode nach einem der Ansprüche 1 bis 3,
**dadurch gekennzeichnet, dass**
der obere Beschlag (21) aus Stahl oder Aluminium oder einer Aluminiumlegierung hergestellt wird.

5. Methode nach einem der Ansprüche 1 bis 3,
**dadurch gekennzeichnet, dass**
der untere Beschlag (25) aus Stahl oder Aluminium oder einer Aluminiumlegierung hergestellt wird.

6. Zwischenplatte eines hydroelastischen Lagers, das zwischen zwei Elementen angeordnet wird, die untereinander aufgehängt werden sollen, und insbesondere für die Aufhängung einer Antriebsgruppe in der Karosserie eines Kraftfahrzeuges bestimmt ist,
**dadurch gekennzeichnet, dass**
sie nach der Methode nach einem der vorausgegangenen Ansprüche hergestellt wird.
